# EUROPÄISCHE PATENTSCHRIFT

(11) **EP 3 625 098 B1**
(45) Veröffentlichungstag und Bekanntmachung des Hinweises auf die Patenterteilung: **20.10.2021**
(21) Anmeldenummer: 18719857.7
(22) Anmeldetag: 24.04.2018
(51) Int. Cl.: B61C 7/04

(54) **SCHIENENFAHRZEUG ZUR DURCHFÜHRUNG EINES ARBEITSEINSATZES AUF EINER GLEISANLAGE**
RAIL VEHICLE FOR CARRYING OUT AN OPERATION ON A TRACK SYSTEM
VÉHICULE FERROVIAIRE PRÉVU POUR EFFECTUER UNE OPÉRATION SUR UNE VOIE FERRÉE

(30) Priorität: 18.05.2017 AT 2082017
(43) Veröffentlichungstag der Anmeldung: 25.03.2020
(73) Patentinhaber: Plasser & Theurer Export von Bahnbaumaschinen GmbH, 1010 Wien (AT)
(72) Erfinder: MAIER, Bernhard, 4040 Linz (AT); WEITERSBERGER, Christian, 4222 St. Georgen an der Gusen (AT); LIEDL, Harald, 4203 Altenberg bei Linz (AT)
(86) Internationale Anmeldenummer: PCT/EP2018/060394
(87) Internationale Veröffentlichungsnummer: WO 2018/210533

(56) Entgegenhaltungen:
- WO-A1-2011/036642
- WO-A1-2017/028942
- WO-A1-2017/050414
- AT-A1- 500 429
- DE-A1-102011 075 509
- DE-U1- 9 307 079

## Beschreibung

### Gebiet der Technik

Die Erfindung betrifft ein Schienenfahrzeug zur Durchführung eines Arbeitseinsatzes auf einer Gleisanlage, mit einem auf Schienenfahrwerken abgestützten Fahrzeugrahmen, mit einem mittels Arbeitsantrieben relativ zum Fahrzeugrahmen verstellbaren Arbeitsgerät und mit einer Kraftquelle zur Versorgung eines Fahrantriebs.

### Stand der Technik

Für Bau- und Instandhaltungsarbeiten auf einer Gleisanlage kommen neben Spezialmaschinen oftmals Schienenfahrzeuge zum Einsatz, die für unterschiedliche Arbeiten geeignet sind. Bezeichnet werden solche Schienenfahrzeuge beispielsweise als Oberbauwagen, Tunnelinspektionsfahrzeug, Motorturmwagen oder Motorbühnenwagen.

Für Inspektions- oder Montagearbeiten an Masten, Oberleitungen, Brücken oder Tunnelwänden stehen zumeist ein Kran mit Arbeitskorb, eine Hubarbeitsbühne und sonstige Arbeitsgeräte zur Verfügung. In der Regel umfasst ein solches Schienenfahrzeug einen eigenen Fahrantrieb für Überstellungsfahrten und für Arbeitsfahrten.

Aus AT 500 429 A1 ist ein Motorturmwagen bekannt, bei dem der Fahrantrieb und diverse Arbeitsantriebe über eine zentralen Kraftquelle und ein Hydraulikaggregat mit Energie versorgt werden. Als Arbeitsgerät ist eine gegenüber einem Fahrzeugrahmen verstellbare Arbeitsbühne angeordnet.

EP 0 732 450 A1 beschreibt einen Oberbau- bzw. Motorturmwagen mit einem Ladekran und einem Fahrantrieb, bei dem jedem Schienenfahrwerk ein eigenes Schaltgetriebe und ein Hydromotor zugeordnet sind. Zur Energieversorgung ist ein Motor vorgesehen, der über ein Pumpenverteilgetriebe mehrere Hydropumpen antreibt. Zum technischen Umfeld wird weiterhin auf die WO 2011/036642 A1 und die WO 2017/028942 A1 verwiesen.

### Zusammenfassung der Erfindung

Der Erfindung liegt die Aufgabe zugrunde, für ein Schienenfahrzeug der eingangs genannten Art eine Verbesserung gegenüber dem Stand der Technik anzugeben.

Erfindungsgemäß wird diese Aufgabe gelöst durch die Merkmale des Anspruchs 1. Abhängige Ansprüche geben vorteilhafte Ausgestaltungen der Erfindung an.

Dabei umfasst das Schienenfahrzeug einen elektrischen Energiespeicher, mittels dem die Arbeitsantriebe und ein Elektroantriebsmotor für die Dauer des Arbeitseinsatzes versorgbar sind, wobei der Elektroantriebsmotor mit dem Fahrantrieb gekoppelt ist. Auf diese Weise ist das Schienenfahrzeug im Arbeitseinsatz lediglich mit Energie aus dem elektrischen Energiespeicher betreibbar und es werden Schadstoffemissionen vermieden und Lärm reduziert. Durch den elektrischen Fahrantrieb während des Arbeitseinsatzes erfolgt zudem eine Energieeffizienzsteigerung gegenüben bekannten Antriebsformen, insbesondere durch Vermeidung von Verlusten in einem Hydrauliksystem.

In einer vorteilhaften Variante ist das Arbeitsgerät als Hubarbeitsbühne zur Durchführung von Oberleitungsarbeiten ausgebildet. Ein solches Schienenfahrzeug ist aufgrund der Schadstoffvermeidung besonders für Arbeitseinsätze in Tunnel geeignet. Auch Einsätze während der Nacht oder an Wochenenden sind aufgrund der geringen Lärmemission in dicht besiedelten Gebieten problemlos möglich.

Vorteilhafterweise ist am Schienenfahrzeug eine elektrische Einspeisevorrichtung angeordnet, um den elektrischen Energiespeicher an eine externe Energieversorgung anzuschließen. Beispielsweise ist das eine Ladesteckvorrichtung, die über einen Trenntransformator und einen Stromrichter mit dem elektrischen Energiespeicher verbunden ist.

Eine Weiterbildung der Erfindung sieht vor, dass das Fahrzeug eine Hilfskraftquelle umfasst und dass die Arbeitsantriebe in einem Notbetrieb über die Hilfskraftquelle versorgbar sind. Ein Arbeitseinsatz kann auf diese Weise auch dann sicher beendet werden, wenn beispielsweise infolge einer Fehlplanung eines Arbeitseinsatzes die Energie im elektrischen Energiespeicher nicht ausreicht oder wenn eine ansonsten vorhandene Hauptkraftquelle (z.B. Verbrennungsmotor oder Brennstoffzelle) ausfällt.

Erfindungsgemäß ist ein Gleichstromnetz angeordnet, das den Energiespeicher umfasst und an das der Elektroantriebsmotor mittels eines ersten Stromrichters angeschlossen ist. Das Gleichstromnetz kann dabei auch zum Anschließen andere Verbraucher oder Energiequellen genutzt werden.

Dabei ist es günstig, wenn wenigsten ein Teil der Arbeitsantriebe als hydraulische Antriebe ausgebildet sind und wenn ein mit einer Hydraulikpumpe gekoppelter Elektromotor mittels eines zweiten Stromrichters an das Gleichstromnetz angeschlossen ist. Insbesondere Kräne und andere Hebezeuge, die gewöhnlich Hydraulikzylinder umfassen, sind damit antreibbar. Der Elektromotor ist nur bei Bedarf im Einsatz, wodurch bei ruhendem Arbeitsgerät kein Energieverbrauch gegeben ist.

Einen weiteren Vorteil bietet das Gleichstromnetz, wenn an dieses ein Bremschopper mit Bremswiderstand angeschlossen ist. Genutzt wird diese Einrichtung, wenn der elektrische Energiespeicher voll aufgeladen ist und Bremsenergie anfällt.

Erfindungsgemäß umfasst die Kraftquelle einen Verbrennungsmotor, der über ein Schaltgetriebe und ein Übersetzungsgetriebe mit dem Fahrantrieb verbunden und der mit einem Generator gekoppelt ist, wobei der Generator über einen Gleichrichter an das Gleichstromnetz angeschlossen ist. Der Verbrennungsmotor dient dabei als Kraftquelle für den Fahrantrieb bei Überstellfahrten, wobei gleichzeitig über den Generator ein Aufladen des elektrischen Energiespeichers möglich ist.

Zur effizienten Versorgung diverser Verbraucher ist es sinnvoll, wenn das Gleichstromnetz über einen dritten Stromrichter mit einem Wechselstrombordnetz gekoppelt ist. Damit sind in Schienenfahrzeugen gebräuchliche Hilfsaggregate betreibbar.

Dabei ist es günstig, wenn das Wechselstrombordnetz über ein Ladegerät mit einem Gleichstrombordnetz gekoppelt ist und wenn das Gleichstrombordnetz eine aufladbare Batterie umfasst. Das Gleichstrombordnetz dient dann zur Versorgung weiterer Verbraucher, insbesondere von Steuerungskomponenten.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Schienenfahrzeug
- Fig. 2: Antriebsschema und Energieversorgung
- Fig. 3: Energieflussschema

### Beschreibung der Ausführungsformen

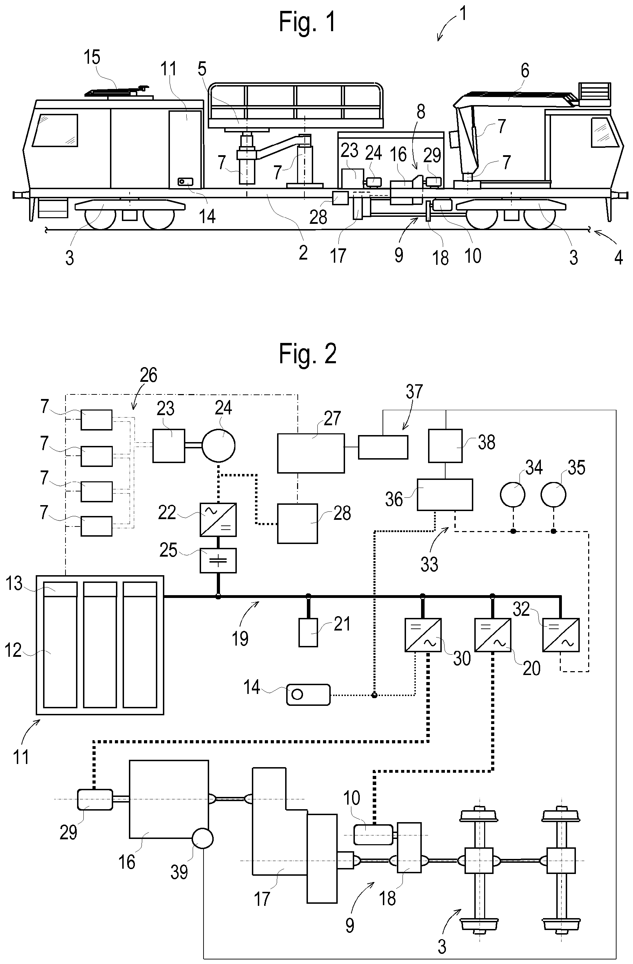

Das Schienenfahrzeug 1 in Fig. 1 umfasst einen Fahrzeugrahmen 2, der auf Schienenfahrwerken 3 auf einem Gleis 4 verfahrbar ist. Auf dem Fahrzeugrahmen 2 sind eine Hubarbeitsbühne 5 und ein Kran 6 als Arbeitsgeräte angeordnet. Diese sind mittels Arbeitsantriebe 7 gegenüber dem Fahrzeugrahmen 2 verstellbar.

Des Weiteren umfasst das Schienenfahrzeug 1 eine Kraftquelle 8 zur Versorgung eines Fahrantriebs 9. Mit dem Fahrantrieb 9 ist ein Elektroantriebsmotor 10 gekoppelt, der für die Dauer eines Arbeitseinsatzes mittels eines elektrischen Energiespeichers 11 versorgt wird. Als elektrischer Energiespeicher 11 sind beispielsweise mehrere miteinander gekoppelte Akkupacks 12 angeordnet, mit einer Steuerungseinheit 13 und einem Thermomanagementsystem.

Zur Fremdeinspeisung ist eine Ladesteckvorrichtung 14 angeordnet. Damit ist der elektrische Energiespeicher 11 bei abgestelltem Schienenfahrzeug 1 über eine externe Versorgungssteckdose aufladbar. Bei vorhandener Oberleitung ist auch ein Stromabnehmer 15 zum Aufladen des elektrischen Energiespeichers 11 nutzbar.

Als Kraftquelle 8 ist beispielsweise ein Verbrennungsmotor 16 angerordnet. Dieser ist über ein Schaltgetriebe 17 und ein Übersetzungsgetriebe 18 mit dem Fahrantrieb 9 verbunden. Dabei ist auch der Elektroantriebsmotor 10 über das Übersetzungsgetriebe 18 mit dem Fahrantrieb 9 gekoppelt. Auf diese Weise ergeben sich bei einem Betrieb mittels Elektroantriebsmotor 10 geringe Verluste, insbesondere gegenüber Hydromotoren. In einer vereinfachten Ausführung dient lediglich der Elektroantriebsmotor 10 als Kraftquelle 8.

In Fig. 2 ist der Aufbau der Energieversorgung schematisch dargestellt. Der elektrische Energiespeicher 11 ist als Element eines am Schienenfahrzeug 1 installierten Gleichstromnetzes 19 angeordnet. Über einen als bidirektionalen Wechselrichter (Inverter) ausgebildeten ersten Stromrichter 20 ist der Elektroantriebsmotor 10 an das Gleichstromnetz 19 angeschlossen.

Beim Bremsen des Schienenfahrzeugs 1 wird der Elektroantriebsmotor 10 generatorisch betrieben und speist Energie zurück ins Gleichstromnetz 19. Falls dabei der elektrische Energiespeicher 11 bereits voll aufgeladen ist, wird diese eingespeiste Energie über einen Bremschoper 21 mittels eines Bremswiderstands in Wärme umgewandelt.

Über einen zweiten als Wechselrichter ausgebildeten Stromrichter 22 ist ein mit einer Hydraulikpumpe 23 gekoppelter Elektromotor 24 an das Gleichstromnetz 19 angeschlossen. Dabei kann ein Kondensatormodul 25 vorgeschaltet sein, um einen hohen Anlaufstrom des Elektromotors 24 abzudecken.

Die Hydraulikpumpe 23 ist ein Element eines Hydrauliksystems 26, das mehrere als hydraulische Antriebe ausgebildete Arbeitsantriebe 7 versorgt. Eine Ansteuerung erfolgt dabei mittels einer Maschinensteuerung 27. Bei einem Ausfall der Energieversorgung aktiviert die Maschinensteuerung 27 eine Hilfskraftquelle 28, mittels der die Arbeitsantreibe 7 in einem Notbetrieb versorgbar sind. Auf diese Weise ist gewährleistet, dass die Hubarbeitsbühne 5 und der Kran 6 jederzeit in eine sichere Position gebracht werden können. Als Hilfskraftquelle 28 ist beispielsweise eine Verbrennungsmotor-Generator-Einheit angeordnet.

Auch der als Hauptkraftquelle 8 dienende Verbrennungsmotor 16 ist vorteilhafterweise mit einem Generator 29 gekoppelt. Dieser ist über einen Gleichrichter 30 an das Gleichstromnetz 19 angeschlossen und liefert bei laufendem Verbrennungsmotor 16 elektrische Energie in das System. Der Gleichrichter 30 wird günstigerweise auch zum Anschließen an ein externes Versorgungsnetz 31 genutzt.

Über einen dritten Stromrichter 32 ist das Gleichstromnetz 19 mit einem Wechselstrombordnetz 33 gekoppelt. An dieses sind diverse Verbraucher wie z.B. ein Kühler 34 oder ein Kompressor 35 angeschlossen. Das Weichselstrombordnetz 33 umfasst auch ein Ladegerät 36 zur Versorgung eines Gleichstrombordnetzes 37. Auch eine externe Versorgung des Ladegeräts 36 über die Ladesteckvorrichtung 14 ist bei abgestelltem Schienenfahrzeug 1 sinnvoll.

Das Gleichstrombordnetz 37 umfasst eine aufladbare Batterie 38, die auch als Starterbatterie für den Verbrennungsmotor 16 ausgebildet sein kann. Mittels eines mit dem Verbrennungsmotor 16 gekoppelten Startergenerators (Lichtmaschine) 39 besteht eine alternative Versorgung des Gleichstrombordnetzes 37. Angeschlossen an das Gleichstrombordnetz 37 sind beispielsweise die Maschinensteuerung 26 und die Steuereinheiten 13 der Akkupacks 12.

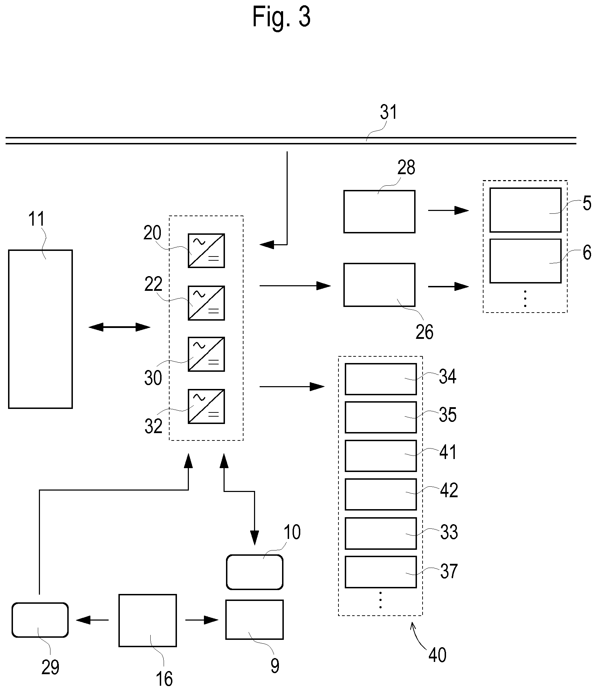

Gemäß dem Energieflussschema (Fig. 3) erfolgt der Energieaustausch des elektrischen Energiespeichers 11 mit den sonstigen Systemkomponenten über die diversen Stromrichter 20, 22, 30, 32. Bei abgestelltem Schienenfahrzeug 1 oder bei verfügbarer Oberleitung wird der elektrische Energiespeicher 11 aus dem externen Versorgungsnetz 31 geladen. Bei laufendem Verbrennungsmotor 16 erfolgt die Aufladung des elektrischen Energiespeichers 11 mittels des Generators 29. Zudem speist der Elektroantriebsmotor 10 während eines Bremsvorgangs Energie zurück in den elektrischen Energiespeicher 11.

Während eines Arbeitseinsatzes versorgt der elektrische Energiespeicher 11 den Elektroantriebsmotor 10 und somit den Fahrantrieb 9 mit Energie. Im Gegensatz zu einer Überstellfahrt erfolgt bei einem Arbeitseinsatz eine Nutzung der Arbeitsgeräte 5, 6, beispielsweise zur Inspektion einer Tunnelwand oder zur Montage einer Oberleitung. Die Kapazität des elektrischen Energiespeichers 11 ist somit für eine Versorgung aller Arbeitsgeräte 5, 6 und des Fahrantriebs 9 während einer vorgegebenen Arbeitseinsatzdauer ausgelegt.

Bei Verwendung hydraulischer Arbeitsantriebe 7 versorgt der elektrische Energiespeicher 11 auch das Hydrauliksystem 26. Dabei kann auch alternativ oder ergänzend zur Versorgung hydraulischer Arbeitsantriebe 7 eine direkte Versorgung von elektrischen Arbeitsantrieben 7 erfolgen. Beim Ausfall des elektrischen Energiespeichers 11 werden in einem Notbetrieb die Arbeitsantriebe 7 mittels der Hilfskraftquelle 28 versorgt.

Des Weiteren fließt elektrische Energie aus dem elektrischen Energiespeicher 11 in das Bordnetz 40, welches das Wechselstrombordnetz 33, das Gleichstrombordnetz 37 und diverse Verbraucher 34, 35, 41, 42 umfasst. Mit dem Bordnetz 40 werden im Wesentlichen Standardfunktionen des Schienenfahrzeugs 1 versorgt. Dazu zählen z.B. auch ein Heizaggregat 41 und eine Klimaanlage 42, wobei günstigerweise energiesparende Wärmepumpen zum Einsatz kommen.

Die möglichen Energieflüsse erlauben einen flexibel Einsatz des Schienenfahrzeugs 1, wobei der elektrische Energiespeicher 11 nach einem durchgeführten Arbeitseinsatz auf unterschiedliche Weise wieder aufgeladen werden kann. Dabei ist das Schienenfahrzeug 1 auch bei leerem Energiespeicher 11 voll funktionsfähig, wenn der Verbrennungsmotor 16 über den Generator 29 das Gleichstromnetz 19 versorgt. Alternativ dazu kann auch eine Brennstoffzelle diese Funktion übernehmen. Dann ist das Schienenfahrzeug 1 auch bei Überstellungsfahrten schadstofffrei betreibbar.

## Patentansprüche

1. Schienenfahrzeug (1) zur Durchführung eines Arbeitseinsatzes auf einer Gleisanlage, mit einem auf Schienenfahrwerken (3) abgestützten Fahrzeugrahmen (2), mit einem mittels Arbeitsantrieben (7) relativ zum Fahrzeugrahmen (2) verstellbaren Arbeitsgerät (5, 6) und mit einer Kraftquelle (8) zur Versorgung eines Fahrantriebs (9), wobei das Schienenfahrzeug (1) einen elektrischen Energiespeicher (11) umfasst, mittels dem die Arbeitsantriebe (7) und ein Elektroantriebsmotor (10) für die Dauer des Arbeitseinsatzes versorgbar sind und, **dadurch gekennzeichnet, dass** ein Gleichstromnetz (19) angeordnet ist, das den elektrischen Energiespeicher (11) umfasst und an das der Elektroantriebsmotor (10) mittels eines ersten Stromrichters (20) angeschlossen ist, dass die Kraftquelle (8) einen Verbrennungsmotor (16) umfasst, der über ein Schaltgetriebe (17) und ein Übersetzungsgetriebe (18) mit dem Fahrantrieb (9) verbunden und mit einem Generator (29) gekoppelt ist, dass der Generator (29) über einen Gleichrichter (30) an das Gleichstromnetz (19) angeschlossen ist und dass der Elektroantriebsmotor (10) über das Übersetzungsgetriebe (18) mit dem Fahrantrieb (9) gekoppelt ist.

2. Schienenfahrzeug (1) nach Anspruch 1, **dadurch gekennzeichnet, dass** das Arbeitsgerät als Hubarbeitsbühne (5) zur Durchführung von Oberleitungsarbeiten ausgebildet ist.

3. Schienenfahrzeug (1) nach Anspruch 1 oder 2, **dadurch gekennzeichnet, dass** am Schienenfahrzeug (1) eine elektrische Einspeisevorrichtung (14, 15) angeordnet ist, um den elektrischen Energiespeicher (11) an eine externe Energieversorgung (31) anzuschließen.

4. Schienenfahrzeug (1) nach einem der Ansprüche 1 bis 3, **dadurch gekennzeichnet, dass** das Fahrzeug (1) eine Hilfskraftquelle (28) umfasst und dass die Arbeitsantriebe (7) in einem Notbetrieb über die Hilfskraftquelle (28) versorgbar sind.

5. Schienenfahrzeug (1) nach Anspruch 4, **dadurch gekennzeichnet, dass** wenigsten ein Teil der Arbeitsantriebe (7) als hydraulische Antriebe ausgebildet sind und dass ein mit einer Hydraulikpumpe (23) gekoppelter Elektromotor (24) mittels eines zweiten Stromrichters (22) an das Gleichstromnetz (19) angeschlossen ist.

6. Schienenfahrzeug (1) nach Anspruch 4 oder 5, **dadurch gekennzeichnet, dass** an das Gleisstromnetz (19) ein Bremschopper (21) mit Bremswiderstand angeschlossen ist.

7. Schienenfahrzeug (1) nach einem der Ansprüche 4 bis 6, **dadurch gekennzeichnet, dass** das Gleichstromnetz (19) über einen dritten Stromrichter (32) mit einem Wechselstrombordnetz (33) gekoppelt ist.

8. Schienenfahrzeug (1) nach Anspruch 7, **dadurch gekennzeichnet, dass** das Wechselstrombordnetz (33) über ein Ladegerät (36) mit einem Gleichstrombordnetz (37) gekoppelt ist und dass das Gleichstrombordnetz (37) eine aufladbare Batterie (38) umfasst.

## Claims

1. A rail vehicle (1) for carrying out a work operation on a track installation, including a vehicle frame (2) supported on on-track undercarriages (3), a working device (5, 6) adjustable relative to the vehicle frame (2) by means of work drives (7), and a power source (8) for supplying a motive drive (9), wherein the rail vehicle (1) comprises an electric energy store (11) by means of which the work drives (7) and an electric drive motor (10) can be supplied for the duration of a work operation, **characterized in that** a DC network (19) is arranged which comprises the energy store (11) and to which the electric drive motor (10) is connected by means of a first power converter (20), that the power source (8) comprises a combustion engine (16) which is connected via a gearbox (17) and a transmission gearing (18) with the motive drive (9) and which is coupled to a generator (29), and that the generator (29) is connected to the DC network (19) via a rectifier (30) and that the electric drive motor (10) is coupled to the motive drive (9) via the transmission gearing (18).

2. A rail vehicle (1) according to claim 1, **characterized in that** the working device is designed as an elevating work platform (5) for carrying out catenary work.

3. A rail vehicle (1) according to claim 1 or 2, **characterized in that** an electrical feed device (14, 15) is arranged on the rail vehicle (1) in order to connect the electrical energy store (11) to an external energy supply (31).

4. A rail vehicle (1) according to one of claims 1 to 3, **characterized in that** the vehicle comprises an auxiliary power source (28), and that the work drives (7) can be supplied in an emergency operation via the auxiliary power source (28).

5. A rail vehicle (1) according to claim 4, **characterized in that** at least some of the work drives (7) are designed as hydraulic drives, and that an electric motor (24) coupled to a hydraulic pump (23) is connected to the DC network (19) by means of a second power converter (22).

6. A rail vehicle (1) according to claim 4 or 5, **characterized in that** a brake chopper (21) with a brake resistor is connected to the DC network (19).

7. A rail vehicle (1) according to one of claims 4 to 6, **characterized in that** the DC network (19) is coupled to an AC board network (33) via a third power converter (32).

8. A rail vehicle (1) according to claim 7, **characterized in that** the AC board network (33) is coupled to a DC board network (37) via a charging device (36), and that the DC board network (37) comprises a rechargeable battery (38).

## Revendications

1. Véhicule ferroviaire (1) pour la réalisation d'une mission sur des voies ferrées, avec un châssis de véhicule (2) appuyé sur des mécanismes de roulement ferroviaires (3), avec un appareil de travail (5, 6) pouvant être déplacé par rapport au châssis de véhicule (2) au moyen d'entraînements de travail (7) et avec une source d'énergie (8) pour l'alimentation d'un entraînement de conduite (9), dans lequel le véhicule ferroviaire (1) comprend un accumulateur d'énergie électrique (11) au moyen duquel les entraînements de travail (7) et un moteur d'entraînement électrique (10) peuvent être alimentés pour la durée de la mission, et **caractérisé en ce qu'**un réseau à courant continu (19) est disposé, lequel comprend l'accumulateur d'énergie électrique (11) et est raccordé au moteur d'entraînement électrique (10) au moyen d'un premier convertisseur (20), que la source d'énergie (8) comprend un moteur à combustion (16) qui est connecté à l'entraînement de conduite (9) par le biais d'une transmission à changement de vitesse (17) et d'un engrenage de transmission (18), et couplé à un générateur (29), que le générateur (29) est raccordé au réseau à courant continu (19) par le biais d'un redresseur (30), et que le moteur d'entraînement électrique (10) est couplé à l'entraînement de conduite (9) par le biais de l'engrenage de transmission (18).

2. Véhicule ferroviaire (1) selon la revendication 1, **caractérisé en ce que** l'appareil de travail est réalisé en tant que plate-forme de travail de levage (5) pour la réalisation de travaux de caténaires.

3. Véhicule ferroviaire (1) selon la revendication 1 ou 2, **caractérisé en ce qu'**un dispositif d'alimentation électrique (14, 15) est disposé sur le véhicule ferroviaire (1) pour raccorder l'accumulateur d'énergie électrique (11) à une alimentation en énergie externe (31).

4. Véhicule ferroviaire (1) selon une des revendications 1 à 3, **caractérisé en ce que** le véhicule (1) comprend une source d'énergie auxiliaire (28) et que les entraînements de travail (7) peuvent être alimentés par le biais de la source d'énergie auxiliaire (28) en mode d'urgence.

5. Véhicule ferroviaire (1) selon la revendication 4, **caractérisé en ce qu'**au moins une partie des entraînements de travail (7) sont réalisés en tant qu'entraînements hydrauliques et qu'un moteur électrique (24) couplé à une pompe hydraulique (23) est raccordé au réseau à courant continu (19) au moyen d'un deuxième convertisseur (22).

6. Véhicule ferroviaire (1) selon la revendication 4 ou 5, **caractérisé en ce qu'**un hacheur de freinage (21) avec une résistance de freinage est raccordé au réseau à courant continu (19).

7. Véhicule ferroviaire (1) selon une des revendications 4 à 6, **caractérisé en ce que** le réseau à courant continu (19) est couplé à un réseau de bord à courant alternatif (33) par le biais d'un troisième convertisseur (32).

8. Véhicule ferroviaire (1) selon la revendication 7, **caractérisé en ce que** le réseau de bord à courant alternatif (33) est couplé à un réseau de bord à courant continu (37) par le biais d'un chargeur (36) et que le réseau de bord à courant continu (37) comprend une batterie rechargeable (38).
